# EUROPÄISCHE PATENTSCHRIFT

(11) **EP 1 057 691 B1**
(45) Veröffentlichungstag und Bekanntmachung des Hinweises auf die Patenterteilung: **08.01.2003**
(21) Anmeldenummer: 00890159.7
(22) Anmeldetag: 18.05.2000
(51) Int. Cl.: B60N 2/68

(54) **Sitzlehne für ein Kraftfahrzeug**
Back rest for an automotive vehicle
Dossier pour un véhicule automobile

(30) Priorität: 27.05.1999 AT 37199
(43) Veröffentlichungstag der Anmeldung: 06.12.2000
(73) Patentinhaber: TCG UNITECH Aktiengesellschaft, 4560 Kirchdorf/Krems (AT)
(72) Erfinder: Strauch, Joachim, Dipl.-Ing, 4400 Steyr (AT)
(74) Vertreter: Babeluk, Michael, Dipl.-Ing. Mag.

(56) Entgegenhaltungen:
- EP-A- 0 096 859
- EP-A- 0 244 785
- EP-A- 0 646 493
- EP-A- 0 881 116
- WO-A-97/19727
- DE-A- 19 625 785
- DE-A- 19 833 887
- US-A- 5 895 096

## Beschreibung

Die vorliegende Erfindung betrifft eine Sitzlehne für ein Kraftfahrzeug, mit einer einstückigen Tragstruktur aus Leichtmetallguss, mit einem im wesentlichen rechteckigen umlaufenden Rahmen, der die obere, die untere und die beiden seitlichen Begrenzungen der Sitzlehne definiert (s. zum Beispiel WO-A-97/19727, die u.a. sich kreuzende Verstärkungsrippen aufweist, welche die beiden seitlichen Begrenzungen der Sitzlehne mit dem Gehäuse eines Sicherheitsgurtes verbinden).

An Sitzlehnen für Kraftfahrzeuge werden zunehmend höhere Anforderungen gestellt. Einerseits muss eine Sitzlehne eine hohe Strukturfestigkeit aufweisen. Dies ist insbesonders dann wichtig, wenn an der Sitzlehne ein Befestigungspunkt für einen Sicherheitsgurt vorgesehen ist, wie dies bei Cabriolets oder Minivans wünschenswert ist. Aber auch für die Erhöhung der Crashsicherheit wird eine große Belastbarkeit verlangt. Andererseits jedoch wird auch an eine Sitzlehne wie an andere Fahrzeugteile ein strenger Maßstab angelegt, was den Leichtbau betrifft. Es wird daher zunehmend dazu übergegangen, die Tragstruktur für eine solche Sitzlehne aus Leichtmetall zu fertigen. Dabei kommen insbesonders Aluminium- und Magnesiumlegierungen in Frage. Besonders günstig ist es, die Tragstruktur einstückig aus Druckguss zu fertigen.

Die DE 196 30 288 A und die DE 198 33 887 A zeigen jeweils eine Tragstruktur für eine Sitzlehne, die aus einem umlaufenden Rahmen besteht, der eine große zentrale Öffnung umgibt. Ein solcher Rahmen bietet zwar eine gewisse Strukturfestigkeit, aber zur Erreichung einer für die Gurtbefestigung ausreichenden Steifigkeit ist ein hoher Materialeinsatz erforderlich, was sowohl das Gewicht als auch die Kosten erhöht.

Die EP 881 116 A offenbart einen Sitzrahmen, der aus einer Platte mit einem umlaufenden Flansch besteht. In der Platte sind eine große zentrale Öffnung und mehrere kleinere Öffnungen vorgesehen. Sowohl die Festigkeit als auch die Steifigkeit scheint im Verhältnis zum notwendigen Gewicht unbefriedigend zu sein.

Die EP 0 244 785 A zeigt eine Rückenlehne für Fahrzeugsitze insbesondere für die hinteren Sitze von Kraftfahrzeugen, die einen kreuzförmigen Blechteil aufweist. Auch hier könnte eine ausreichende Strukturfestigkeit nicht gegeben sein.

Auch die Lösungen, die in der EP 0 646 493 A oder der GB 2 246 699 A offenbart sind, könnten die geforderten Ansprüche nicht erfüllen.

Aufgabe der Erfindung ist es, die Möglichkeit zu schaffen, einen Fahrzeugsitz der oben beschriebenen Art so zu verbessern, dass bei geringerem Gewicht eine größere Steifigkeit und Belastbarkeit erzielt wird. Dabei soll eine möglichst einfache und kostengünstige Herstellung der Tragstruktur möglich sein.

Diese Aufgaben werden dadurch gelöst, dass in dem Rahmen eine kreuzförmige Versteifungsrippe, vorzugsweise im Bereich seiner Diagonalen angeordnet ist, auf deren Rückseite rasterförmig angeordnete Rippenstrukturen vorgesehen sind. Durch die erfindungsgemäße Lösung werden zwei vorteilhafte Wirkungen gleichzeitig erzielt. Zum einen hat sich die kreuzförmige Versteifungsrippe als sehr wirksame Versteifung insbesonders für Sitzlehnen herausgestellt, die einen Befestigungspunkt für einen Sicherheitsgurt aufweisen. Zum anderen können auf diese Weise die Fließwege des Materials beim Herstellungsvorgang verkürzt werden, was sich positiv auf die Qualität und die Festigkeit auswirkt. Ein zusätzlicher Vorteil besteht darin, dass durch die Versteifungsrippe ein Schutz der Fahrzeuginsassen gegen von hinten eindringende Gegenstände erzielt wird.

Gusstechnisch ist es besonders vorteilhaft, wenn die Versteifungsrippe schwach gekrümmt ausgebildet ist. Um thermische Spannungen beim Abkühlen zu vermeiden, die zu unerwünschten Verformungen oder Rissen führen können, hat sich eine geringe Krümmung als vorteilhaft herausgestellt. Eine solche Krümmung kann entweder als globale Krümmung ausgebildet sein, bei der die Versteifungsrippe dem Verlauf einer Zylinderfläche oder einer sphärischen Fläche folgt, die innerhalb des Rahmens aufgespannt ist, oder als lokale Krümmung, bei der die einzelnen Stege der Versteifungsrippe einen gekrümmten Querschnitt aufweisen. Der Vorteil der globalen Krümmung liegt darin, dass Temperaturspannungen gut abgebaut werden können, während die lokal gekrümmte Form durch eine besondere Steifigkeit ausgezeichnet ist.

Eine besonders gussgerechte Form ergibt sich dadurch, dass die Versteifungsrippe einen Mittelteil aufweist, von dem aus sich zu jeder Ecke des Rahmens ein Verbindungssteg erstreckt. Besonders vorzugsweise ist mindestens ein Verbindungssteg durch eine Ausnehmung in zwei Abschnitte unterteilt. Auf diese Weise können die Fließwege optimiert werden, da die Fließgeschwindigkeit durch eine Querschnittsverringerung gesteigert wird, so dass die Abkühlung der Schmelze beim Gießvorgang verringert wird, und es kann dadurch höchste Festigkeit erreicht werden.

In einer besonders bevorzugten Ausführungsvariante der Erfindung ist vorgesehen, dass der Anguss in einer Ausnehmung angeordnet ist, die durch die Versteifungsrippe und den Rahmen gebildet ist. Dadurch kann die Gesamtabmessung der Gießform klein gehalten werden. Es erweist sich aber auch als besonders günstig, dass die Fließwege zu den besonders beanspruchten Eckbereichen des Rahmens kurz und etwa gleich lang sind. Dies kann insbesonders dadurch begünstigt werden, dass der Anguss bevorzugt in den Mittelteil der Versteifungsrippe erfolgt. Der Anschnitt, das ist der Übergangsbereich vom Anguss zum Werkstück ist dabei fächerförmig ausgebildet. Nach dem Gießvorgang wird der Anschnitt weggestanzt. Ein weiterer Vorteil dieser Lösung besteht darin, dass in der relativ großen Ausnehmung für den Anguss beim fertigen Sitz eine Lordosenstütze untergebracht werden kann.

Eine weitere Verbesserung der Gussqualität kann erzielt werden, wenn an den Übergängen zwischen dem Rahmen und der Versteifungsrippe Verbindungsrippen als Fließhilfen angeordnet sind.

In der Folge wird die Erfindung anhand der in den Figuren dargestellten Ausführungsbeispiele näher erläutert. Es zeigen:
- Fig. 1: eine axonometrische Darstellung einer erfindungsgemäßen Sitzlehne von vorne,
- Fig. 2: eine axonometrische Darstellung der Sitzlehne von Fig. 1 von hinten,
- Fig. 3: eine Ansicht der Sitzlehne von vorne,
- Fig. 4: eine Seitenansicht dieser Sitzlehne und die
- Fig. 5: ein Diagramm, das den Gießvorgang zu Herstellung einer Sitzlehne nach Fig. 1 bis 4 erklärt.

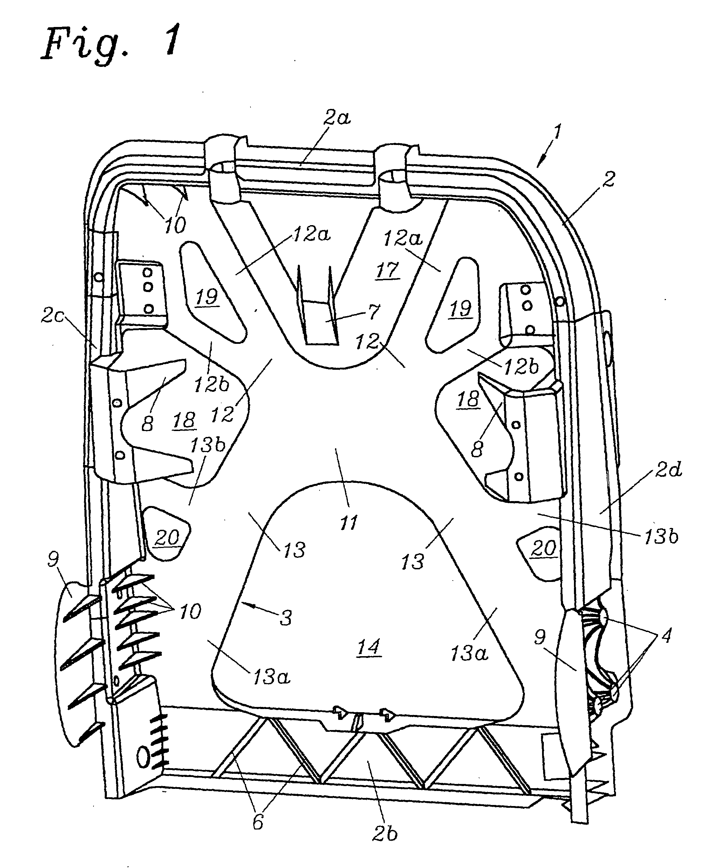

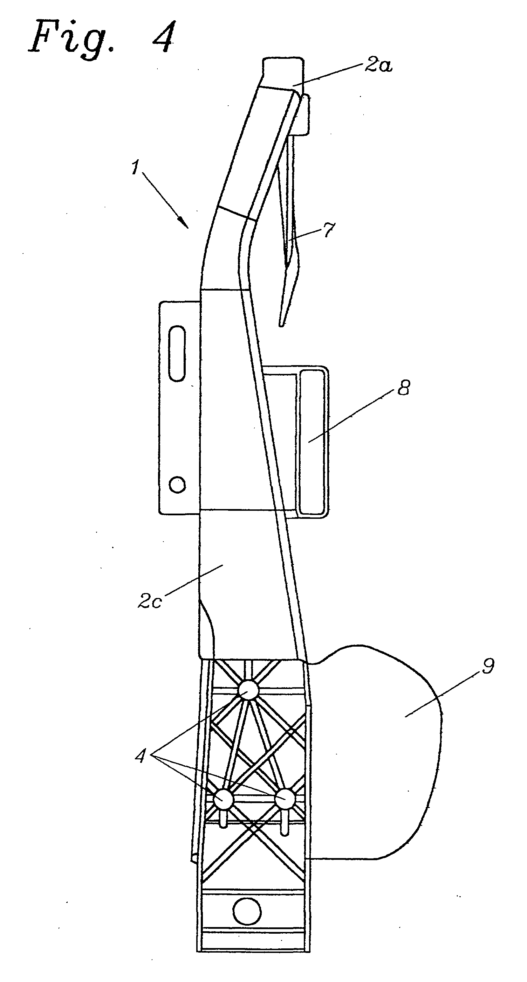

In den Fig. 1 bis 4 ist von der Sitzlehne zur Vereinfachung nur die Tragstruktur 1 dargestellt. Die Tragstruktur 1 besteht aus einem umlaufenden Rahmen 2, der einen oberen Abschnitt 2a, einen unteren Abschnitt 2b und seitliche Abschnitte 2c und 2d aufweist. Eine kreuzförmige Versteifungsrippe ist allgemein mit 3 bezeichnet.

Der obere Abschnitt 2a des Rahmens 2 besitzt einen im wesentlichen U-förmigen Querschnitt. Dies gilt auch für die seitlichen Abschnitte 2c und oberhalb der Butzen 4 für die Lehnenbefestigung. Zur Verstärkung sind innerhalb des U-förmigen Querschnitts Verstärkungsrippen 5 vorgesehen. Der untere Abschnitt 2b des Rahmens 2 ist im wesentlichen flach, mit Verstärkungsrippen 6 auf der Vorderseite.

Am oberen Abschnitt 2a des Rahmens 2 ist eine Halterung 7 für einen nicht dargestellten Verstellmotor einer Kopfstütze angeformt. Weiters sind Halterungen 8, 9 an den seitlichen Abschnitten 2c und 2d des Rahmens 2 angeformt, die zur ergonomischen Ausformung der Sitzlehne beitragen, indem sie entsprechende Verankerungen für die zu befestigende Polsterung bieten. Verbindungsrippen 10 dienen als Fließhilfen zwischen der Versteifungsrippe 3 und dem Rahmen 2. Gleichzeitig werden durch diese Verbindungsrippen 10 die Festigkeit und Steifigkeit verbessert.

Die Versteifungsrippe 3 besteht aus einem Mittelteil 11, von dem aus zwei Verbindungsstege 12 zu den oberen Eckbereichen des Rahmens 2 führen, das sind die Stellen, an denen der obere Abschnitt 2a in die seitlichen Abschnitte 2c und 2d übergeht. In analoger Weise führen Verbindungsstege 13 zu den unteren Eckbereichen des Rahmens 2, das sind die Stellen, an denen der untere Abschnitt 2b in die seitlichen Abschnitte 2c und 2d übergeht. Auf diese Weise erstreckt sich die Versteifungsrippe 3 im Wesentlichen in dem Bereich der Diagonalen des Rechtecks, das durch den Rahmen 2 aufgespannt wird.

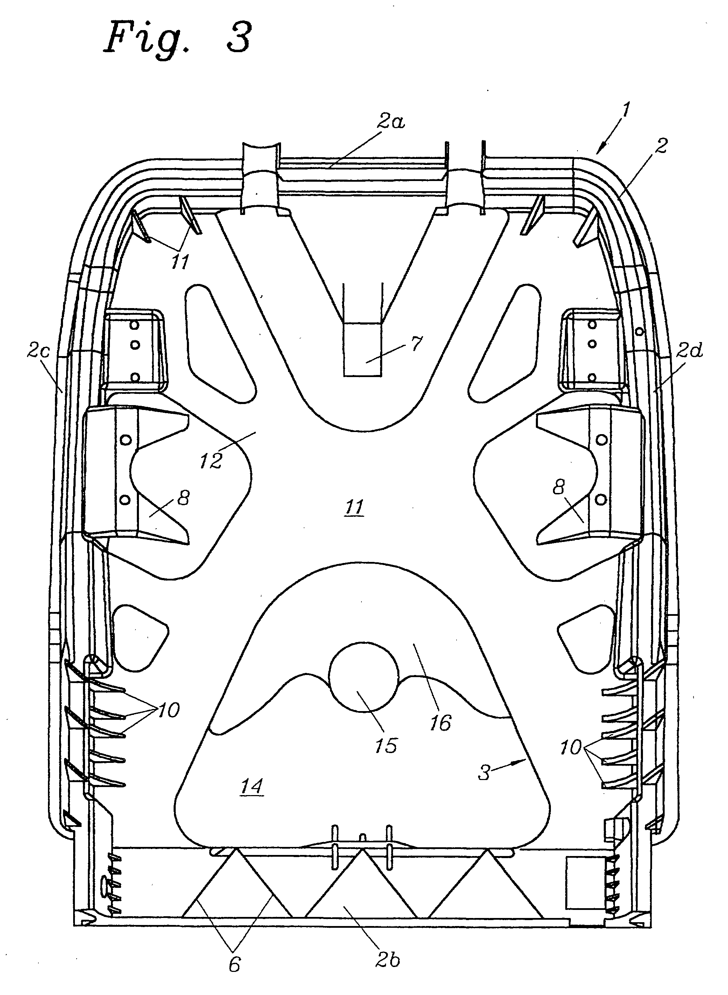

Zwischen den Verbindungsstegen 13 und dem unteren Abschnitt 2b befindet sich eine relativ große Ausnehmung 14, die den Anguss zur Herstellung der Tragstruktur aufnimmt. In der Fig. 3 ist der Anguss mit 15 bezeichnet. Über den dünnwandigen Anschnitt 16 steht der Anguss 15 mit dem Mittelteil 11 und den benachbarten Abschnitten der Verbindungsstege 13 in Verbindung. Nach dem Erkalten des Gussstücks kann der Anschnitt 16 samt Anguss 15 durch Stanzen entfernt werden. Die Ausnehmung 14 kann in weiterer Folge auch dazu dienen, Bauteile wie etwa eine Lordosenstütze aufzunehmen, mit der die Krümmung der Sitzlehne im Bereich der Lendenwirbelsäule verändert werden kann. Die Halterungen 7 und 8 sind in weiteren Ausnehmungen 17, 18 angeordnet, die zwischen den Verbindungsstegen 12 und 13 einerseits und den Abschnitten 2a, 2c und 2d andererseits angeordnet sind. Auf diese Weise kann ohne zusätzliche Maßnahmen eine einfache Entformung gewährleistet werden.

Innerhalb der Verbindungsstege 12 ist jeweils eine Ausnehmung 19 vorgesehen, die jeden Verbindungssteg 12 in zwei Abschnitte 12a und 12b unterteilt. Auf diese Weise kann nicht nur Gewicht eingespart werden, sondern es wird vor allem der Herstellungsvorgang optimiert. Insbesonders beim Magnesium-Druckguss ist es wichtig, die Fließgeschwindigkeit des Materials innerhalb der Form zu steuern. Ein schnelles Fließen ist erwünscht, um die Abkühlung so gering als möglich zu halten. Andererseits soll ein Schäumen des Materials möglichst verringert werden, was die Fließgeschwindigkeit nach oben hin begrenzt. Es hat sich herausgestellt, dass die Unterteilung der Verbindungsstege 12 in zwei Abschnitte 12a, 12b einen optimalen Gießvorgang ermöglicht. In analoger Weise sind die Verbindungsstege 13 durch Ausnehmungen 20 in jeweils zwei Abschnitte 13a und 13b unterteilt.

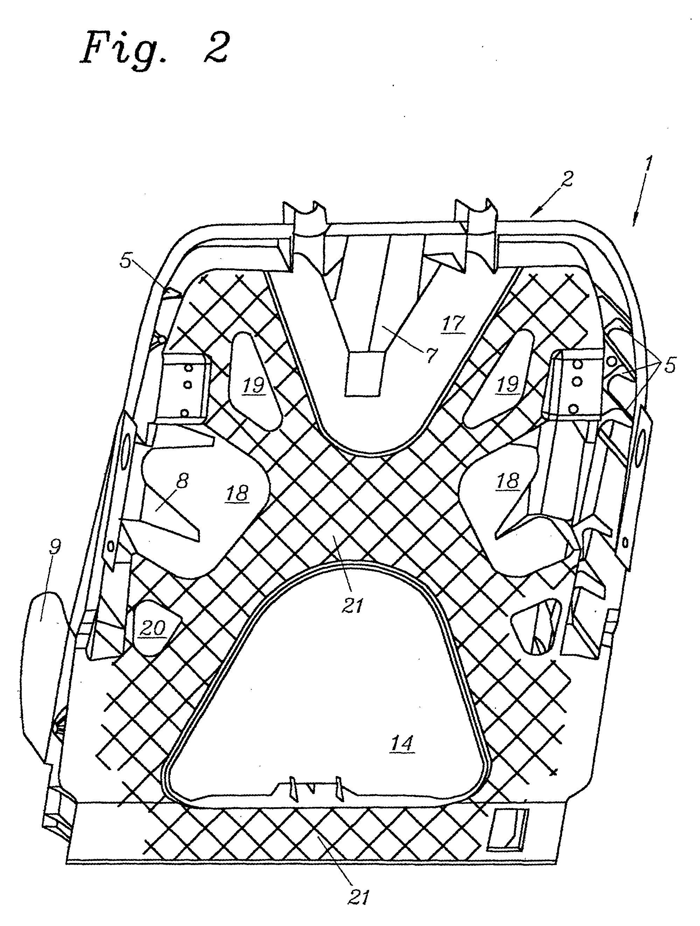

In der Fig. 2 sind rasterförmig angeordnete Rippenstrukturen 21 ersichtlich, die auf der Rückseite der Versteifungsrippe 3 und im unteren Abschnitt 2b des Rahmens 2 angeordnet sind.

Die einzelnen Verbindungsstege 12, 13 der Versteifungsrippe 3 können an ihren Rändern, d.h. im Bereich der Ausnehmungen 14, 17 oder 18 oder im Bereich der Ausnehmungen 19 und 20 nicht dargestellte Randflansche aufweisen, die zur Verstärkung dienen.

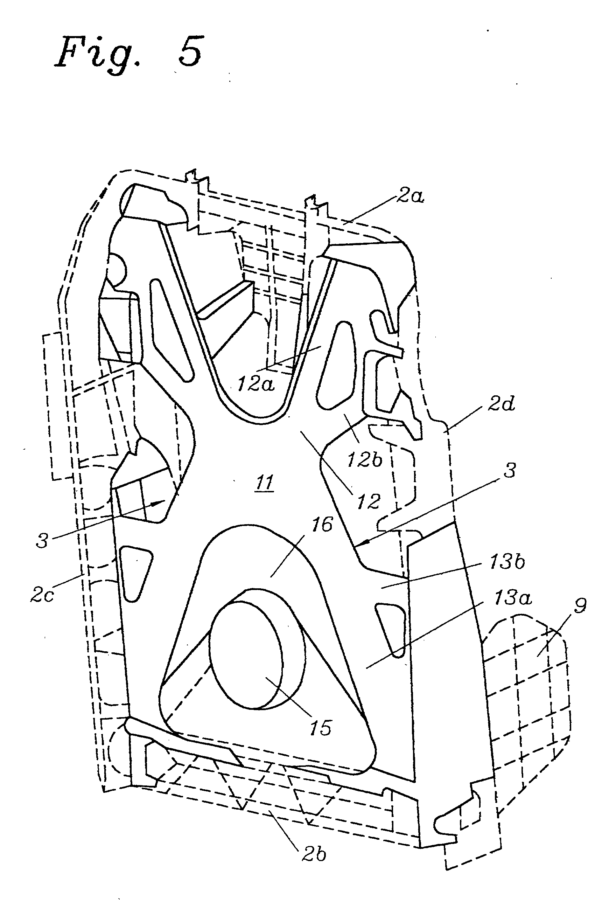

Die Fig. 5 zeigt in der Form eines Diagramms, wie die Füllung der Gießform voranschreitet. Bei der dargestellten Simulation wird von etwa 50% Materialeinbringung ausgegangen. Die mit durchgezogenen Linien dargestellten Teile des Werkstücks sind diejenigen, die bereits durch das eingeströmte Material ausgebildet sind, während die mit unterbrochenen Linien dargestellten Teile die noch nicht gefüllten Formhohlräume darstellen. Es ist ersichtlich, dass in dem dargestellten Zustand die Versteifungsrippe 3 vollständig ausgebildet ist, während der Rahmen 2 erst im Bereich seiner Ecken ausgebildet ist. Vorteilhaft ist dabei, dass die besonders kritischen Teile, wie die Butzen 4 für die Befestigungspunkte und der Bereich der Gurtbefestigung, frühzeitig ausgebildet werden, wodurch die Gussqualität dort größtmöglich ist.

## Patentansprüche

1. Sitzlehne für ein Kraftfahrzeug, mit einer einstückigen Tragstruktur (1) aus Leichtmetallguss, mit einem im wesentlichen rechteckigen umlaufenden Rahmen (2), der die obere, die untere und die beiden seitlichen Begrenzungen der Sitzlehne definiert, **dadurch gekennzeichnet, dass** in dem Rahmen (2) eine kreuzförmige Versteifungsrippe (3) bevorzugt im Bereich seiner Diagonalen angeordnet ist, auf deren Rückseite rasterförmig angeordnete Rippenstrukturen (21) vorgesehen sind.

2. Sitzlehne nach Anspruch 1, **dadurch gekennzeichnet, dass** die Versteifungsrippe (3) schwach gekrümmt ausgebildet ist.

3. Sitzlehne nach einem der Ansprüche 1 bis 2, **dadurch gekennzeichnet, dass** die Versteifungsrippe (3) einen Mittelteil (11) aufweist, von dem aus sich zu jeder Ecke des Rahmens (2) ein Verbindungssteg (12, 13) erstreckt.

4. Sitzlehne nach Anspruch 3, **dadurch gekennzeichnet, dass** mindestens ein Verbindungssteg (12, 13) durch eine Ausnehmung (19, 20) in zwei Abschnitte (12a, 12b; 13a, 13b) unterteilt ist.

5. Sitzlehne nach einem der Ansprüche 1 bis 4, **dadurch gekennzeichnet, dass** der Anguss (15) in einer Ausnehmung (14) angeordnet ist, die durch die Versteifungsrippe (3) und den Rahmen (2) gebildet ist.

6. Sitzlehne nach Anspruch 3, **dadurch gekennzeichnet, dass** der Anguss in den Mittelteil (11) der Versteifungsrippe (3) erfolgt.

7. Sitzlehne nach einem der Ansprüche 1 bis 6, **dadurch gekennzeichnet, dass** an den Übergängen zwischen dem Rahmen (2) und der Versteifungsrippe (3) Verbindungsrippen (10) als Fließhilfen angeordnet sind.

## Claims

1. Seat back for a vehicle with a one-piece supporting structure (1) made of light metal alloy, with a frame (2) having an essentially rectangular contour and defining the upper, the lower and the two lateral delimitations of the seat back, **characterized in that** a cross-shaped reinforcement rib (3) is accommodated in the frame (2), preferably in the vicinity of its diagonals, said cross-shaped reinforcement rib (3) being provided with rib structures (21) arranged on the backside thereon in a grid-like configuration.

2. Seat back according to claim 1, **characterized in that** the reinforcement rib (3) is slightly curved.

3. Seat back according to one of the claims 1 through 2, **characterized in that** the reinforcing rib (3) is provided with a central part (11) from which one connecting web (12, 13) is projecting to either corner of the frame (2).

4. Seat back according to claim 3, **characterized in that** at least one connecting web (12, 13) is divided into two sections (12a, 12b; 13a, 13b) by way of a recess (19, 20).

5. Seat back according to one of the claims 1 through 4, **characterized in that** the gating (15) is accommodated in a recess (14) constituted by the reinforcement rib (3) and the frame (2).

6. Seat back according to claim 3, **characterized in that** the gating preferably occurs in the central part (11) of the reinforcement rib (3).

7. Seat back according to one of the claims 1 through 6, **characterized in that** connecting ribs (10) are arranged on the transitions between the frame (2) and the reinforcement rib (3) to serve as flow aids.

## Revendications

1. Dossier de siège de véhicule automobile comportant une structure de support (1) en une seule pièce en une fonte de métal léger, ayant un châssis (2) essentiellement rectangulaire, périphérique, qui définit les limites supérieure, inférieure et les deux limites latérales du dossier de siège,
**caractérisé en ce que**
le cadre (2) comporte une nervure de renforcement (3) cruciforme, de préférence au niveau de ses diagonales et dont le côté arrière comporte des structures de nervures (21) en forme de trame.

2. Dossier de siège selon la revendication 1,
**caractérisé en ce que**
la nervure de renforcement (3) est légèrement courbe.

3. Dossier de siège selon l'une des revendications 1 et 2,
**caractérisé en ce que**
la nervure de renforcement (3) comporte une partie médiane (11) de laquelle part une branche de liaison (12, 13) reliée à chaque coin du cadre (2).

4. Dossier de siège selon la revendication 3,
**caractérisé par**
au moins une branche de liaison (21, 13) subdivisée par une découpe (19, 20) en deux segments (12a, 12b ; 13a, 13b).

5. Dossier de siège selon l'une des revendications 1 à 4,
**caractérisé en ce que**
l'amorce de coulée (15) se trouve dans une cavité (14) formée par la nervure de renforcement (3) et le cadre (2).

6. Dossier de siège selon la revendication 3,
**caractérisé en ce que**
l'amorce de coulée se trouve dans la partie centrale (11) de la nervure de renforcement (3).

7. Dossier de siège selon les revendications 1 à 6,
**caractérisé en ce qu'**
aux jonctions entre le cadre (2) et la nervure de rigidification (3), il y a des nervures de liaison (10) pour faciliter la coulée.
